# EUROPEAN PATENT APPLICATION

(11) **EP 4 481 902 A1**
(43) Date of publication of application: **25.12.2024**
(21) Application number: 24178764.7
(22) Date of filing: 29.05.2024
(51) Int. Cl.: H01M 50/103, H01M 50/15, H01M 50/474, H01M 50/486, H01M 50/55, H01M 50/553, H01M 50/586, H01M 50/59

(54) **ELECTRICITY STORAGE DEVICE AND METHOD OF MANUFACTURING ELECTRICITY STORAGE DEVICE**

(30) Priority: 21.06.2023 JP 2023101405
(71) Applicant: Prime Planet Energy & Solutions, Inc., Chuo-ku Tokyo 103-0022 (JP)
(72) Inventor: MARUBAYASHI, Hironori, Tokyo, 103-0022 (JP); OSHIMA, Kazuki, Tokyo, 103-0022 (JP)
(74) Representative: Kuhnen & Wacker Patent- und Rechtsanwaltsbüro PartG mbB

(57) **Abstract**

An electricity storage device includes an electrode assembly, a case main body, a lid, a terminal, a current collector, an insulating member, and an insulating film. The electrode assembly includes a tab. The insulating film is disposed inside the case main body so as to cover the electrode assembly. The insulating film is made of a resin film that electrically insulates the case main body and the electrode assembly from each other. The insulating film is joined to at least one of the lid, the insulating member attached to the lid, and the current collector.

## Description

The present disclosure relates to electricity storage devices and methods of manufacturing an electricity storage device.

### BACKGROUND

JP 2022-188665 A discloses a battery including a plurality of electrode assemblies and a battery case accommodating the plurality of electrode assemblies. Each of the electrode assemblies includes a pair of flat outer surfaces. Each of the electrode assemblies is provided with positive electrode and negative electrode tab groups. An electrode current collecting part is attached to the electrode tab groups. A fixing member including a base material and an adhesive layer is disposed from the pair of flat outer surface of the electrode assembly to the electrode current collecting part. It is stated that the battery with such a configuration is able to prevent damages to the electrode tab groups.

### SUMMARY

The present inventors intend to propose a novel structure for reducing damage to electrode tabs.

An electricity storage device according to the present disclosure includes: an electrode assembly including a tab; a case main body including an opening and accommodating the electrode assembly; a lid closing the opening; a terminal attached to the lid; an insulating member interposed between the lid and the terminal; a current collector connected to the terminal and the tab of the electrode assembly; and an insulating film disposed inside the case main body so as to cover the electrode assembly, the insulating film electrically insulating the case main body and the electrode assembly from each other and being made of a resin film. The insulating film is joined to at least one of the lid, the insulating member attached to the lid, and the current collector.

Such an electricity storage device is able to reduce damage to the tabs.

### BRIEF DESCRIPTION OF THE DRAWINGS

Fig. 1 is a perspective view illustrating an electricity storage device 100.
Fig. 2 is a schematic cross-sectional view taken along line II-II in Fig. 1.
Fig. 3 is a perspective view schematically illustrating an electrode assembly 40.
Fig. 4 is a perspective view illustrating an electrode assembly 40 to which second current collectors 72 and 77 are connected.
Fig. 5 is a perspective view illustrating electrode assemblies 40 to which a lid 54 is connected.
Fig. 6 is a plan view illustrating an insulating film 98.
Fig. 7 is a perspective view illustrating an electrode assembly 40 covered by the insulating film 98.
Fig. 8 is a perspective view illustrating electrode assemblies 40 covered by the insulating film 98.
Fig. 9 is an enlarged view illustrating the lid 54 to which the electrode assembly 40 is connected.

### DETAILED DESCRIPTION

Hereinbelow, embodiments of the technology according to the present disclosure will be described with reference to the drawings. It should be noted, however, that the disclosed embodiments are, of course, not intended to limit the disclosure. The drawings are depicted schematically and do not necessarily accurately depict actual objects. The features and components that exhibit the same effects are designated by the same reference symbols as appropriate, and the description thereof will not be repeated as appropriate. In the following description, reference characters L, R, F, Rr, U and D in the drawings represent left, right, front, rear, up, and down, respectively, and reference characters X, Y, and Z in the drawings represent the shorter-side axis, the longer-side axis, and the heightwise axis of the electricity storage device, respectively. These directional terms are, however, merely provided for purposes in illustration and are not intended to limit the arrangements and embodiments of the electricity storage device in any way.

### Electricity Storage Device 100

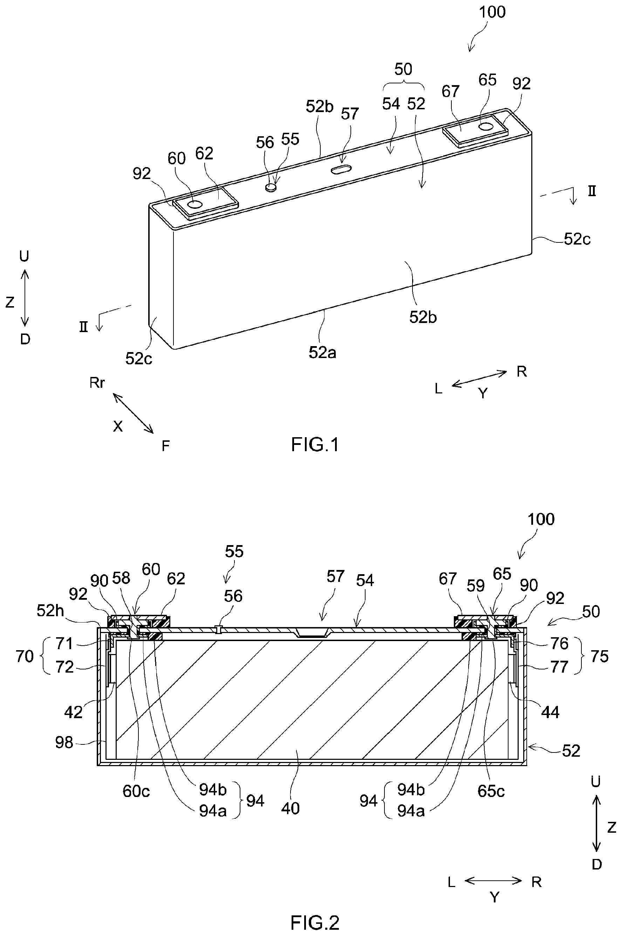

Fig. 1 is a perspective view illustrating an electricity storage device 100. Fig. 2 is a schematic cross-sectional view taken along line II-II in Fig. 1. The electricity storage device 100 includes an electrode assembly 40, a case main body 52, a lid 54, terminals 60 and 65, current collectors 70 and 75, insulating members 90, 92, and 94, and an insulating film 98. In the present description, the term "electricity storage device" refers to a device that is capable of extracting electric energy. Examples of the electricity storage device include secondary batteries, in which repeated charging and discharging are possible by means of migration of charge carriers through an electrolyte between a pair of electrodes (positive electrode and negative electrode), including, for example, lithium-ion secondary batteries. Hereinbelow, the electricity storage device 100 will be described, along with a method of manufacturing the electricity storage device 100, taking a lithium-ion secondary as an example.

### Method of Manufacturing Electricity Storage Device 100

A method of manufacturing an electricity storage device 100 includes a step of preparing a case main body 52, a step of preparing an electrode assembly 40, a step of preparing an insulating film 98, a step of restraining the electrode assembly 40 with the insulating film 98, and a step of encasing the electrode assembly 40 into the case main body 52.

### Step of Preparing a Case Main Body 52

The step of preparing the case main body 52 involves preparing the case main body 52 that accommodates the electrode assembly 40. In this embodiment, the case main body 52 is an angular-shaped case main body 52. The case main body 52 includes, as illustrated in Fig. 1, a flat, substantially rectangular bottom wall 52a, a pair of first side walls 52b extending upward along the heightwise axis Z from longer sides of the bottom wall 52a, and a pair of second side walls 52c extending upward along the heightwise axis Z from shorter sides of the bottom wall 52a. The case main body 52 includes a substantially rectangular opening 52h (see Fig. 2) at the top. In other words, the case main body 52 opens in a substantially rectangular shape at the top.

### Step of Preparing an Electrode Assembly 40

The step of preparing an electrode assembly 40 involves preparing an electrode assembly 40 that is attached via current collectors 70 and 75 (see Fig. 2) to a lid 54. In the step of preparing an electrode assembly 40, the electrode assembly 40 may be prepared in the following manner. The lid 54, the electrode assembly 40, and the current collectors 70 and 75 (a positive electrode current collector 70 and a negative electrode current collector 75) are prepared respectively. In this embodiment, as illustrated in Fig. 2, the positive electrode current collector 70 includes a positive electrode first current collector 71 and a positive electrode second current collector 72. The negative electrode current collector 75 includes a negative electrode first current collector 76 and a negative electrode second current collector 77. Hereinafter, the positive electrode first current collector 71 and the negative electrode first current collector 76 are also collectively referred to as "first current collectors 71 and 76", and the positive electrode second current collector 72 and the negative electrode second current collector 77 are also collectively referred to as " second current collectors 72 and 77". The positive electrode first current collector 71 and the negative electrode first current collector 76 are attached to the lid 54. The positive electrode second current collector 72 and the negative electrode second current collector 77 are attached to the electrode assembly 40. Hereinbelow, the lid 54, the electrode assembly 40, and the current collectors 70 and 75 are described in sequence. It should be noted that each of the current collectors 70 and 75 does not need to be divided into the first current collectors 71 and 76 and the second current collectors 72 and 77 but each may be an integrated single current collector.

### Lid 54

The lid 54 is a member that closes the opening 52h at the top of the case main body 52. The case main body and the lid 54 may also be collectively referred to as a case 50. The lid 54 has a shape corresponding to the opening 52h. In this embodiment, the lid 54 is a substantially rectangular plate-shaped member. The lid 54 is provided with a filling port 55 and a gas vent valve 57. The filling port 55 is a through hole provided for filling an electrolyte solution (not shown) into the interior of the battery case 50. When filling of the electrolyte solution is completed, the filling port 55 is sealed with a sealing member 56. The gas vent valve 57 is a thinned portion that is designed to rupture (i.e., to open) when a large amount of gas is generated inside the case 50, so as to expel the gas. The lid 54 is formed with terminal insertion holes 58 and 59 (see Fig. 2), to which a positive electrode terminal 60 and a negative electrode terminal 65 are respectively fitted. The terminal insertion holes 58 and 59 are formed at respective end portions of the width axis Y of the lid 54.

The terminals (the positive electrode terminal 60 and the negative electrode terminal 65) are fitted to the lid 54 via insulating members 90, 92, and 94. The positive electrode terminal 60 and the negative electrode terminal 65 are fitted to the lid 54 at respective end portions of the width axis Y of the electricity storage device 100. The positive electrode terminal 60 is connected to a plate-shaped positive electrode external conductive member 62 outside the case 50. The negative electrode terminal 65 is connected to a plate-shaped negative electrode external conductive member 67 outside the case 50. The positive electrode external conductive member 62 and the negative electrode external conductive member 67 are connected to other electricity storage devices and external devices via an external connecting member (such as a bus bar).

### First Current Collectors 71 and 76

The first current collectors 71 and 76 are each a plate-shaped conductive member. As illustrated in Fig. 2, each of the positive electrode first current collector 71 and the negative electrode first current collector 76 extends along the inner surface of the lid 54. The positive electrode first current collector 71 and the negative electrode first current collector 76 are attached to the inner surface of the lid 54. A lower end 60c of the positive electrode terminal 60 is connected to the positive electrode first current collector 71. A lower end 65c of the negative electrode terminal 65 is connected to the negative electrode first current collector 76.

### Insulating Members 90, 92, and 94

The insulating members 90, 92, and 94 include a gasket 90, an outer insulating member 92, and an inner insulating member 94. The gasket 90 is fitted to each of the terminal insertion holes 58 and 59 of the lid 54. The gasket 90 is interposed between the lid 54 and each of the terminals 60 and 65 in each of the terminal insertion holes 58 and 59, to prevent electrical conduction between the lid 54 and the terminals 60 and 65. The outer insulating member 92 is disposed on the outer surface of the lid 54. On the outer surface of the lid 54, the outer insulating member 92 is interposed between the lid 54 and the positive electrode external conductive member 62 and between the lid 54 and the negative electrode external conductive member 67, to prevent electrical conduction between the lid 54 and the positive electrode external conductive member 62 and between the lid 54 and the negative electrode external conductive member 67. The inner insulating member 94 is disposed on the inner surface of the lid 54. On the inner surface of the lid 54, the inner insulating member 94 is interposed between the lid 54 and the first current collector 71 and between the lid 54 and the first current collector 76, to prevent electrical conduction between the lid 54 and the first current collector 71 and between the lid 54 and the first current collector 76.

The inner insulating member 94 includes a plate-shaped base portion 94a attached to the inner surface of the lid 54. The inner insulating member 94 incudes a protruding portion 94b protruding from the base portion 94a toward the electrode assembly 40. The protruding portion 94b restricts upward and downward movements of the electrode assembly 40 to prevent the electrode assembly 40 and the lid 54 from coming into direct contact with each other. The material for the insulating members has predetermined insulating capability, and it is selected taking electrolyte resistance and heat resistance into consideration. For the insulating members, it is possible to use various synthetic resin materials, such as polyolefin-based resins, polyamide-based resins, polyphenylene sulfide resins, and fluorine-based resins.

### Electrode Assembly 40

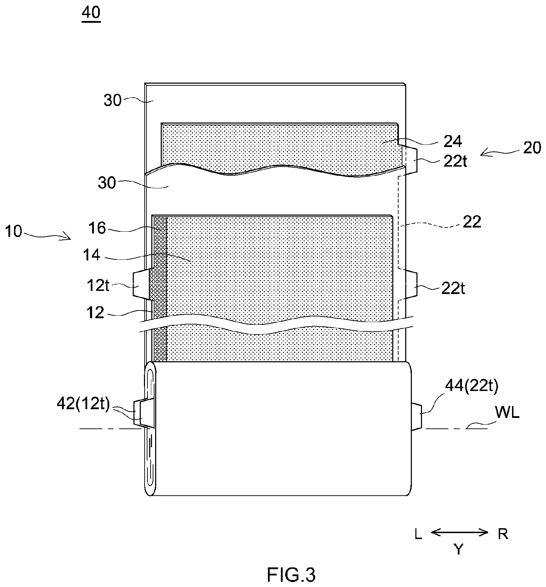

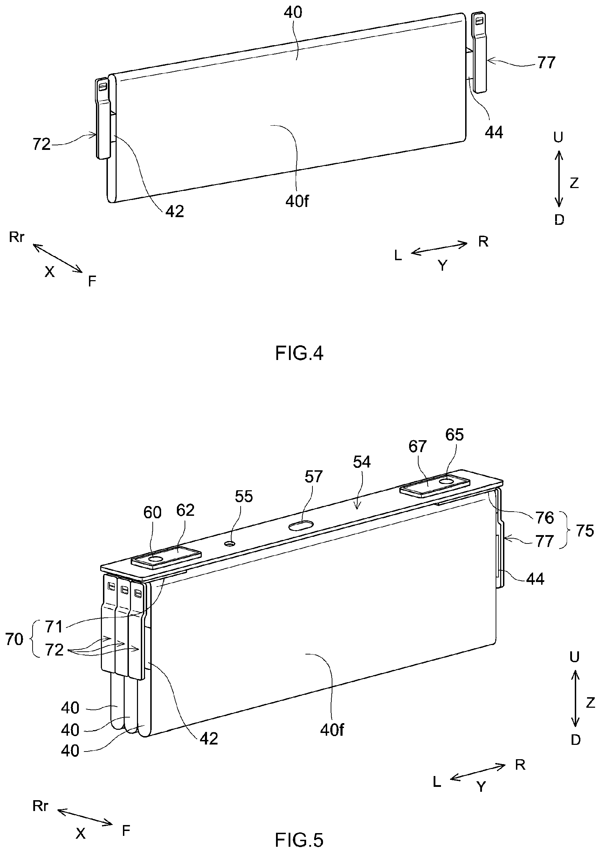

Fig. 3 is a perspective view schematically illustrating the electrode assembly 40. As illustrated in Fig. 3, the electrode assembly 40 is an electrode assembly in which a strip-shaped positive electrode 10 and a strip-shaped negative electrode 20 are wound together with strip-shaped separators 30 interposed therebetween. The electrode assembly 40 includes tabs (a positive electrode tab group 42 and a negative electrode tab group 44 in this embodiment). The electrode assembly 40 is what is called a wound electrode assembly. The electrode assembly 40 is prepared in such a manner that the positive electrode 10 and the negative electrode 20 are stacked with their orientations aligned with each other with the separators 30 interposed therebetween and they are wound around a winding axis WL. The outer circumferential surface of the electrode assembly 40 after winding is covered by the separator 30. The winding axis WL is set along the widthwise axis of the positive electrode 10, the negative electrode 20, and the separators 30. In this embodiment, the electrode assembly 40 is press-formed after winding, to be formed into a flat shape. The electrode assembly 40 is formed with a flat portion 40f (see Fig. 4) the outer surface of which is flat. Note that the electrode assembly 40 is not limited to such an embodiment. It is also possible that the electrode assembly 40 may be, for example, what is called a stacked electrode assembly in which rectangular positive electrodes and rectangular negative electrodes are alternately stacked on each other with separators interposed therebetween.

### Positive Electrode 10

The positive electrode 10 is an oblong strip-shaped member. The positive electrode 10 includes a positive electrode substrate 12, which is a metal member in a foil shape, and a positive electrode active material layer 14, which is formed on a surface of the positive electrode substrate 12. From the viewpoint of battery performance, the positive electrode active material layer 14 may preferably be formed on both surfaces of the positive electrode substrate 12. One side edge of the positive electrode 10 is provided with positive electrode tabs 12t protruding outward along the Y axis (leftward in Fig. 3). A plurality of the positive electrode tabs 12t are provided along the longitudinal axis of the positive electrode 10 so as to be spaced at predetermined intervals. Each of the positive electrode tabs 12t is a region that is not provided with the positive electrode active material layer 14 or a protective layer 16 so that the positive electrode substrate 12 is exposed therefrom. In a state in which the electrode assembly 40 is wound, the positive electrode tabs 12t are stacked and connected to each other to form a positive electrode tab group 42. For the positive electrode substrate 12, it is possible to use a metal material having predetermined electrical conductivity. It is preferable that the positive electrode substrate 12 be made of, for example, aluminum or an aluminum alloy.

The positive electrode active material layer 14 is a layer containing a positive electrode active material. The positive electrode active material is a material that is able to reversibly absorb and release charge carriers in relation to the later-described negative electrode active material. The positive electrode active material is not limited to any particular material. For the positive electrode active material, it is possible to use, for example, lithium-transition metal composite oxides.

The positive electrode active material layer 14 may contain additive agents, other than the positive electrode active material. The positive electrode active material layer 14 may contain a binder. A suitable example of the binder may be a resin binder. Suitable examples of the resin binder may include, for example, polyvinylidene fluoride (PVDF). The positive electrode active material layer 14 may preferably contain a conductive agent. Suitable examples of the conductive agent include carbon materials such as acetylene black (AB).

A protective layer 16 may be provided, as necessary, on one side edge portion of the positive electrode 10. The protective layer 16 is a layer configured to show a lower electrical conductivity than the positive electrode active material layer 14. The protective layer 16 is provided on the positive electrode substrate 12 at a position facing the negative electrode active material layer 24 across the separator 30. Although the configuration of the protective layer 16 is not particularly limited, the protective layer 16 may be, for example, a layer coated with a resin or a layer containing inorganic particles or a binder.

### Negative Electrode 20

The negative electrode 20 is an oblong strip-shaped member. The negative electrode 20 includes a negative electrode substrate 22, which is a metal member in a foil shape, and a negative electrode active material layer 24, which is formed on a surface of the negative electrode substrate 22. From the viewpoint of battery performance, the negative electrode active material layer 24 may preferably be formed on both surfaces of the negative electrode substrate 22. One side edge of the negative electrode 20 is provided with negative electrode tabs 22t protruding outward along the Y axis (rightward in Fig. 3). The negative electrode tabs 22t protrude in the opposite direction to the above-described positive electrode tab 12t. A plurality of the negative electrode tabs 22t are provided along the longitudinal axis of the negative electrode 20 so as to be spaced at predetermined intervals. Each of the negative electrode tabs 22t is a region that is not provided with the negative electrode active material layer 24 so that the negative electrode substrate 22 is exposed therefrom. In a state in which the electrode assembly 40 is wound, the negative electrode tabs 22t are stacked and connected to each other to form a negative electrode tab group 44. For the negative electrode substrate 22, it is possible to use a metal material having predetermined electrical conductivity. It is preferable that the negative electrode substrate 22 be made of, for example, copper or a copper alloy.

The negative electrode active material layer 24 is a layer containing a negative electrode active material. The negative electrode active material is a material that is able to reversibly absorb and release charge carriers in relation to the positive electrode active material. The negative electrode active material is not limited to any particular material. Suitable examples of the negative electrode active material include, for example, carbon materials, silicon based materials, and composite oxides thereof. Examples of the carbon materials may include graphite, hard carbon, soft carbon, and amorphous carbon. Examples of the silicon based materials include silicon and silicon oxide (silica).

The negative electrode active material layer 24 may contain additive agents, other than the negative electrode active material. The negative electrode active material layer 24 may contain a binder as an additive agent. A suitable example of the binder is a resin binder. Examples of the resin binder may include styrene-butadiene rubber (SBR), carboxymethylcellulose (CMC), and polyacrylic acid (PAA), for example. The negative electrode active material layer 24 may preferably contain a conductive agent. Suitable examples of the conductive agent include carbon materials, such as acetylene black (AB) and carbon nanotubes.

### Separator 30

The separator 30 is an oblong strip-shaped member that has the function to prevent the positive electrode 10 and the negative electrode 20 from coming into contact and also to allow charge carriers to pass therethrough. The width of the separator 30 may be set to a size such as to be able to cover the positive electrode active material layer 14 of the positive electrode 10 and the negative electrode active material layer 24 of the negative electrode 20. The separator 30 may preferably use a porous resin film provided with a plurality of micropores allowing charge carriers to pass through. Examples of the separator 30 include porous sheets (films) made of various types of resins, including polyolefins and polyamides, such as polyethylene (PE) and polypropylene (PP). Such a porous sheet may have either a single layer structure or a layered structure including two or more layers.

The resin sheet that forms the separator 30 may also be provided with a heat resistant layer. The heat resistant layer is a layer that exhibits excellent heat resistance. It is preferable that the heat resistant layer contain ceramic particles and a binder. For the ceramic particles, it is possible to use, for example, alumina or the like.

The separator 30 may also include an adhesive layer. The adhesive layer is a layer that exhibits excellent adhesiveness with the electrode plates (i.e., the positive electrode 10 and the negative electrode 20). The adhesive layer may be formed on a resin sheet that forms the separator 30. The adhesive layer causes the positive electrode 10 and the separator 30 to be adhesively bonded to each other easily and causes the negative electrode 20 and the separator 30 to be adhesively bonded to each other easily. The adhesive layer may use any known material. The adhesive layer may use resin materials. The adhesive layer may contain a binder, such as polyvinylidene fluoride. The adhesive layer may also contain ceramic particles. The adhesive layer may use one that exhibits adhesive force by means of, for example, pressure, heat, and the like.

Fig. 4 is a perspective view illustrating an electrode assembly 40 to which second current collectors 72 and 77 are connected. Fig. 5 is a perspective view illustrating electrode assemblies 40 to which a lid 54 is connected.

### Second Current Collectors 72 and 77

The second current collectors 72 and 77 are each a plate-shaped conductive member. As illustrated in Fig. 4, the positive electrode second current collector 72 and the negative electrode second current collector 77 are connected respectively to the tabs (the positive electrode tab group 42 and the negative electrode tab group 44) of the electrode assembly 40. In other words, the electrode assembly 40 is connected to current collectors (the positive electrode second current collector 72 and the negative electrode second current collector 77) via tabs. The tabs and the second current collectors 72 and 77 are joined to each other by, for example, laser welding.

As illustrated in Fig. 5, the positive electrode tab group 42 and the negative electrode tab group 44 are bent with the second current collectors 72 and 77 respectively connected thereto. The second current collectors 72 and 77 that have been bent are connected to the first current collectors 71 and 76, which are disposed on the inner surface of the lid 54. As a result, the electrode assembly 40 is attached to the lid 54. In this embodiment, three electrode assemblies 40 are attached to the lid 54. The electrode assemblies 40 are attached to the lid 54 in such a state as to be stacked along the thicknesswise axis X and aligned with respect to the widthwise axis Y and the heightwise axis Z. Note that the number of electrode assemblies 40 to be attached to the lid 54 is not limited to a particular number, and may be either one or more.

### Step of Preparing an Insulating Film 98

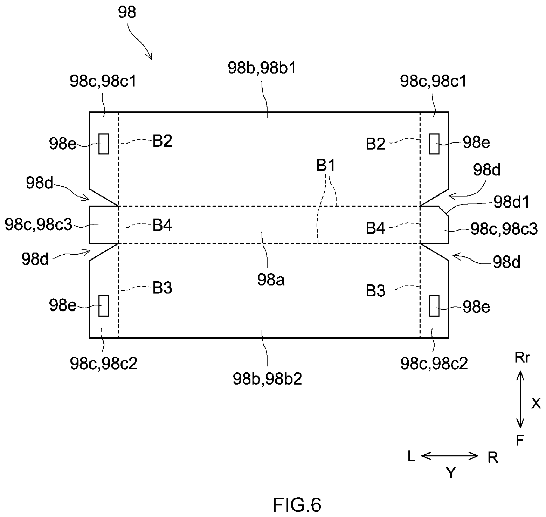

The step of preparing an insulating film 98 involves preparing an insulating film 98 (see Figs. 1 and 6) made of a resin film. The insulating film 98 is a film-state insulating member that is disposed inside the case main body 52 so as to cover the electrode assembly 40. The insulating film 98 may use resin materials, such as polypropylene (PP) and polyethylene (PE), for example. Herein, the insulating film 98 may be prepared corresponding to the shape of the electrode assembly 40.

Fig. 6 is a plan view illustrating the insulating film 98. Fig. 6 shows a developed view of the insulating film 98 before covering the electrode assembly 40. As illustrated in Fig. 6, the insulating film 98 includes a bottom surface portion 98a, wider surface portions 98b, and side surface portions 98c. The dimensions of the bottom surface portion 98a, the wider surface portions 98b, and the side surface portions 98c may be determined according to the dimensions of the electrode assembly 40.

The bottom surface portion 98a is in a substantially rectangular shape. The bottom surface portion 98a has dimensions corresponding to the thickness (the dimension along the X-axis in Fig. 5) and the width (the dimension along the Y-axis in Fig. 5) of the electrode assembly 40. In this embodiment, the dimension of the shorter side of the bottom surface portion 98a is set to be substantially the same as the thickness of the electrode assembly 40. The dimensions of the bottom surface portion 98a may be determined so that the difference between the dimension of the shorter side of the bottom surface portion 98a and the thickness of the electrode assembly 40 is less than or equal to 1 mm (for example, less than or equal to 0.5 mm). In the present description, the term "thickness of the electrode assembly 40" refers to the total thickness of electrode assemblies 40. When a plurality of electrode assemblies 40 are stacked along the thicknesswise axis, the term "thickness of the electrode assembly 40" means the total thickness of the plurality of electrode assemblies 40. In this embodiment, the term "thickness of the electrode assembly 40" means the total of the thicknesses of the three stacked electrode assemblies 40.

The dimension of the longer side of the bottom surface portion 98a is set to be substantially the same as the width of the electrode assembly 40 including the attached current collectors 70 and 75. In this embodiment, the width of the electrode assembly 40 corresponds to the dimension from the outer surface of the second current collector 72 to the outer surface of the second current collector 77. The dimensions of the bottom surface portion 98a may be determined so that the difference between the dimension of the longer side of the bottom surface portion 98a and the width of the electrode assembly 40 is less than or equal to 1 mm (for example, less than or equal to 0.5 mm).

The wider surface portions 98b include a first wider surface portion 98b1 and a second wider surface portion 98b2. Each of the first wider surface portion 98b1 and the second wider surface portion 98b2 is in a substantially rectangular shape. Each of the first wider surface portion 98b1 and the second wider surface portion 98b2 has dimensions corresponding to the width and height (the dimension along the Z-axis in Fig. 5) of the electrode assembly 40. The first wider surface portion 98b1 and the second wider surface portion 98b2 extend from respective sides of the bottom surface portion 98a that correspond to the width (the dimension along the Y-axis in Fig. 5) of the electrode assembly 40.

A pair of side surface portions 98c are provided along the left-right axis Y The pair of side surface portions 98c extend from the bottom surface portion 98a and the wider surface portions 98b. The pair of side surface portions 98c each include a first side surface portion 98c1, a second side surface portion 98c2, and a third side surface portion 98c3. The first side surface portion 98c1 extends from the first wider surface portion 98b1. The second side surface portion 98c2 extends from the second wider surface portion 98b2. The third side surface portion 98c3 extends from the bottom surface portion 98a. In this embodiment, the first side surface portions 98c1, the second side surface portions 98c2, and the third side surface portions 98c3 are symmetrical with respect to the X-axis, except for a later-described portion 98d1 that is cut out.

Respective cut-outs 98d are formed between the first side surface portion 98c1 and the third side surface portion 98c3 and between the second side surface portion 98c2 and the third side surface portion 98c3. In this embodiment, the cut-outs 98d are formed from the end portions of the side surface portions 98c along the left-right axis Y to the boundaries between the side surface portions 98c and the bottom surface portion 98a and between the side surface portions 98c and the wider surface portions 98b. Each of the cut-outs 98d is in a substantially right triangular shape. The side surface portions 98c may be provided with a portion 98d1 that is partially cut off, in order to indicate the orientation of the insulating film 98.

It should be noted that the shape of the cut-outs 98d tabs is not limited to a particular shape, and may be, for example, a substantially rectangular shape or a shape formed by curve, such as a circular arc. It is also possible that the insulating film 98 may have cuts formed in the side surface portions 98c along the extension lines of the boundaries between the bottom surface portion 98a and the wider surface portions 98b, without forming cut-outs 98d therein.

The side surface portions 98c are provided with joining portions 98e, which is to be joined to the current collectors 70 and 75 in a later step. In this embodiment, the joining portions 98e are set in the first side surface portions 98c1 and the second side surface portions 98c2. The joining portions 98e are set in the locations in which the first side surface portions 98c1 and the second side surface portions 98c2 overlap when the insulating film 98 is built. In this embodiment, the joining portions 98e are set at the locations that come in contact with the current collector 70 attached to the middle electrode assembly 40 of the three electrode assemblies 40. The joining portions 98e may be subjected to a treatment for increasing the joining capability when they are joined to the current collectors 70 and 75 in a later step. Note that the positions of the joining portions 98e are not particularly limited.

In the insulating film 98, boundaries B1 to B4 are set for separating the bottom surface portion 98a, the wider surface portions 98b, and the side surface portions 98c. The insulating film 98 is folded along the boundaries B1 to B4 in a later step to cover the electrode assembly 40. The boundaries B1 to B4 are set corresponding to the dimensions (for example, thickness, width, and height) of the electrode assembly 40. The boundaries B1 are set between the bottom surface portion 98a and the wider surface portions 98b. The boundaries B2 are set between the first wider surface portion 98b1 and the first side surface portions 98c1. The boundaries B3 are set between the second wider surface portion 98b2 and the second side surface portions 98c2. The boundaries B4 are set between the bottom surface portion 98a and the third side surface portions 98c3.

As described above, the dimensions of the longer side and the shorter side of the bottom surface portion 98a are set to be substantially the same as the width and thickness, respectively, of the electrode assembly 40. From the viewpoint of dimensional error in the components, the dimensions of the longer side and the shorter side of the bottom surface portion 98a may be set to have a dimensional difference of less than or equal to 1 mm (for example, less than or equal to 0.5 mm) from the width and thickness of the electrode assembly 40. The boundaries B1 to B4 are provided at such locations that the electrode assembly 40 and the insulating film 98 are easily restrained on the side circumferential surfaces of the electrode assembly 40 when the electrode assembly 40 is covered by the insulating film 98.

The insulating film 98 may be subjected to a treatment for improving workability when being folded. Examples of such a treatment include preliminary folding the insulating film 98 along the boundaries B 1 to B4, grooving along the boundaries B 1 to B4 to such an extent that the insulating film 98 is not torn, and the like.

### Step of Restraining Electrode Assembly 40 with Insulating Film 98

The step of restraining the electrode assembly 40 with the insulating film 98 (hereinafter also referred to simply as "step of restraining") involves covering and restraining the electrode assembly 40 with the insulating film 98. In addition, the step of restraining the electrode assembly 40 with the insulating film 98 includes joining the insulating film 98 to at least one of the lid 54, the insulating member 94 attached to the lid 54, and the current collectors 70 and 75. In this embodiment, the step of restraining involves joining a portion of the insulating film 98 and a portion of the current collector 70.

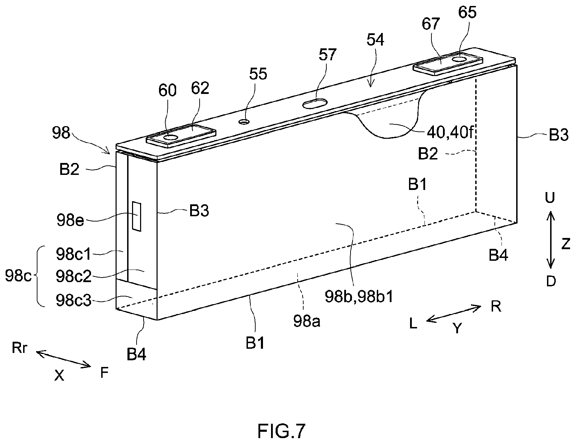

Fig. 7 is a perspective view illustrating the electrode assembly 40 covered by the insulating film 98. Fig. 7 shows a state in which a portion of the insulating film 98 is cut out and the electrode assembly 40 is partially exposed. As illustrated in Fig. 7, in the step of restraining, the insulating film 98 is folded along the electrode assembly 40, and the electrode assembly 40 is covered by the insulating film 98. The insulating film 98 is folded along the boundaries B 1 to B4.

First, the bottom surface portion 98a of the insulating film 98 is fitted to the lower surface of the electrode assembly 40. The insulating film 98 is folded along the boundaries B 1. This causes the wider surface portions 98b of the insulating film 98 to face the flat portions 40f of the electrode assembly 40. The insulating film 98 is folded along the boundaries B2. This causes the first side surface portions 98c1 of the insulating film 98 to face the side surfaces of the electrode assembly 40 and the second current collectors 72 and 77 (see Fig. 5). The insulating film 98 is folded along the boundaries B3. This causes the second side surface portions 98c2 of the insulating film 98 to be overlapped with portions of the first side surface portions 98c1 from outside. The insulating film 98 is folded along the boundaries B4. This causes the third side surface portion 98c3 of the insulating film 98 to be overlapped with portions of the first side surface portions 98c1 and the second side surface portions 98c2 from outside. As a result, the electrode assembly 40 is covered by the insulating film 98. At this time, the folding positions on the insulating film 98 may be adjusted as appropriate in order to restrain the electrode assembly 40 firmly. In addition, the order in which the insulating film 98 is folded is not particularly limited. For example, it is possible that the first side surface portion 98c1 of the insulating film 98 may be placed on the flat portion 40f of the electrode assembly 40, or the third side surface portions 98c3 of the insulating film 98 may be positioned inward relative to portions of the first side surface portions 98c1 and the second side surface portions 98c2.

Subsequently, portions of the insulating film 98 are joined to the current collectors 70 and 75 with the electrode assembly 40 being covered by the insulating film 98. At this time, the portions of the insulating film 98 may be joined to the current collectors 70 and 75 while a restraining pressure being applied to the electrode assembly 40 by the insulating film 98. The joining may be carried out in any suitable method.

In this embodiment, the portions of the insulating film 98 are heated to weld the portions of the insulating film 98 and portions of the current collectors 70 and 75. As illustrated in Fig. 7, a joining portion 98e is set in a portion of the insulating film 98 in which the first side surface portions 98c1 and the second side surface portions 98c2 overlap. The joining portions 98e of the insulating film 98 are heated. The heating may be carried out in any suitable method. For example, it is possible that the insulating film 98 may be welded to the current collectors 70 and 75 by pressing a welding pin heated to higher than or equal to the melting point of the insulating film 98 against the joining portions 98e. The heating conditions at this time are set to such conditions that the insulating film 98 can be melted and welded to the current collectors 70 and 75 at the joining portions 98e against which the heated welding pin is pressed. The heating conditions are set as appropriate depending on the areas of the joining portions 98e, the materials of the insulating film 98 and the current collectors 70 and 75, and the like. The heating conditions to be adjusted may include the diameter of the welding pin, the pressure for pressing the welding pin, temperature, heating time, and the like.

### Step of Encasing Electrode Assembly 40 into Case Main Body 52

The step of encasing the electrode assembly 40 into the case main body 52 (hereinafter also referred to simply as "step of encasing) involves encasing the electrode assembly 40 covered by the insulating film 98 into the case main body 52 (see Fig. 2). In the step of encasing, as illustrated in Fig. 2, the electrode assembly 40 that is covered and restrained by the insulating film 98 is put into the case main body 52 in a known manner. After encasing the electrode assembly 40, the lid 54 to which the electrode assembly 40 has been attached is welded to the case main body 52, to thereby close the opening 52h. An electrolyte solution is filled through the filling port 55, to thus construct an electricity storage device assembly. The electricity storage device assembly is subjected to an initial charging process and an aging process in a known manner, to thus produce an electricity storage device 100.

There are cases in which the electrode assembly may move within the case when the electricity storage device is subjected to vibration. The electrode assembly is connected to current collectors and terminals via tabs. The tabs are extended from substrates and connected to the current collectors with them being stacked. If the electrode assembly moves within the case, the current collectors, which are attached to the lid of the case, also move relative to the electrode assembly. This may cause damage to the tabs. To the present inventors' knowledge, in manufacturing conventional electricity storage devices, covering the electrode assembly with an insulating film was considered merely as an assembling step of insulating member and there was no idea of restraining. For this reason, the assembled insulating film was set to have dimensions such as to be spacious relative to the electrode assembly. In addition, when the electrode assembly is secured using a securing member (for example, a tape including a substrate material and an adhesive layer), manufacturing cost can increase for reasons such as requiring an additional manufacturing step and increasing the number of parts.

The electricity storage device 100 manufactured according to the above-described embodiment includes an electrode assembly 40, a case main body 52, a lid 54, terminals 60 and 65, an insulating member 94, current collectors 70 and 75, and an insulating film 98. The electrode assembly 40 includes tabs 42 and 44. The case main body 52 includes an opening 52h. The case main body 52 accommodates the electrode assembly 40. The lid 54 is a member that closes the opening 52h. The terminals 60 and 65 are attached to the lid 54. The insulating member 94 is interposed between the lid 54 and the terminals 60 and 65. The current collectors 70 and 75 are connected to the terminals 60 and 65, and the tabs 42 and 44 of the electrode assembly 40, respectively. The insulating film 98 is disposed inside the case main body 52 so as to cover the electrode assembly 40. The insulating film 98 is made of a resin film that electrically insulates the case main body 52 and the electrode assembly 40 from each other. The insulating film 98 is joined to the current collectors 70 and 75.

In such an electricity storage device 100, the insulating film 98 is joined to the current collectors 70 and 75 with the electrode assembly 40 being covered by the insulating film 98. The electrode assembly 40 is covered by the insulating film 98 with a restraining pressure applied thereto, and the insulating film 98 is connected to the current collectors 70 and 75. Such a configuration inhibits the electrode assembly 40 from moving relative to the current collectors 70 and 75. This allows the tabs 42 and 44 to be less likely to be placed under load, and reduces damage to the tabs 42 and 44.

In addition, the insulating film 98 is joined to the current collectors 70 and 75, so the electrode assembly 40 is restrained without using additional parts, such as securing members. This makes it possible to provide a structure for restraining the electrode assembly 40 without increasing the number of parts, to reduce manufacturing costs and to reduce the energy required for manufacturing.

In the electricity storage device 100, portions of the current collectors 70 and 75 are welded to the insulating film 98. This inhibits relative movements of the electrode assembly 40 and the current collectors 70 and 75 without using additional securing members, reducing damage to the tabs 42 and 44. This reduces the number of parts. In addition, welding of the insulating film 98 to the current collectors 70 and 75 can be implemented at the same time when the electrode assembly 40 is covered by the insulating film 98 and the first side surface portions 98c1 and the second side surface portions 98c2 are welded together. As a result, it is possible to restrain the electrode assembly 40 without providing an additional step of securing the electrode assembly 40 with a securing member or the like. This may lower manufacturing costs and reduce the energy required for manufacturing.

In the above-described embodiment, the dimensions of the boundaries B 1 to B4 on the insulating film 98 are set so that the gap between the electrode assembly 40 and the insulating film 98 is minimum on the side circumferential surfaces of the electrode assembly 40 when the electrode assembly 40 is covered by the insulating film 98. This allows the electrode assembly 40 to be easily restrained by the insulating film 98. As a result, damage to the tabs 42 and 44 is reduced during the manufacturing of the electricity storage device 100.

The positions of the joining portions 98e, the method of joining, and the like are not limited by the foregoing embodiments. For example, the positions and areas of the joining portions 98e may be set as appropriate from the viewpoint of reducing damage to the tabs 42 and 44 and from the viewpoint of productivity.

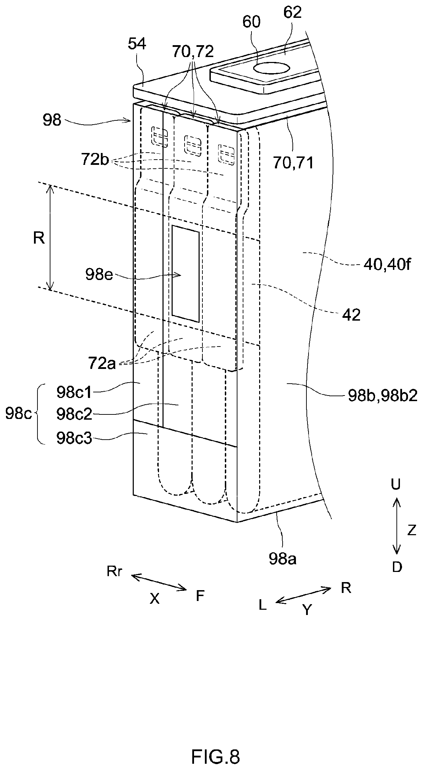

Fig. 8 is a perspective view illustrating electrode assemblies 40 covered by the insulating film 98. In Fig. 8, a side face of the electrode assemblies 40 covered by the insulating film 98 is shown enlarged. In Fig. 8, the structure inward of the insulating film 98 is shown by dashed lines. Herein, the position of the joining portion 98e is described taking the positive electrode second current collector 72 as an example, but the same configuration may be employed for the negative electrode side, so the detailed description thereof will be omitted. As illustrated in Fig. 8, the second current collector 72 includes a lower portion 72a connected to the tab 42, and an upper portion 72b connected to the first current collector 71. The lower portion 72a and the upper portion 72b extend along the up-down axis. A step is provided between the lower portion 72a and the upper portion 72b, and the lower portion 72a is positioned more outward relative to the upper portion 72b. Note that the shape of the second current collector 72 is not limited to such an embodiment. The second current collector 72 may be, for example, in a flat shape, in which the step is not provided.

The joining portion 98e may be provided at a position that comes into contact with a portion of the current collector 70 that is most outward (the lower portion 72a in this embodiment). This enables the electrode assembly 40 to be firmly restrained by the insulating film 98. The joining portion 98e may be provided in a region R whose corresponding position on the opposite side is connected to the tab 42. This may reduce the load applied to the joining portion 98e during the joining.

The joining portion 98e may preferably be set as wide an area as possible of the lower portion 72a. However, from the viewpoint of productivity, the position of the joining portion 98e may be set in a portion of the location that comes into contact with the lower portion 72a. From the viewpoint of pressure applied in welding and from the viewpoint of widening the joining area, it is also possible to use a welding pin that is capable of welding at a multiplicity of points.

From the viewpoint of preventing joining defects due to misalignment, the position of the joining portion 98e may be set at a portion of the location that comes into contact with the lower portion 72a. When a plurality of electrode assemblies 40 are covered by the insulating film 98, the joining portion 98e may be set at a location that comes into contact with the current collector 70 connected to one of the electrode assemblies 40 that is disposed at the center. This enables the electrode assembly 40 to be restrained stably.

In the above-described embodiment, joining of the insulating film 98 and the current collectors 70 and 75 is implemented by welding the insulating film 98 to the current collectors 70 and 75 by heating. However, joining of the insulating film 98 and the current collectors 70 and 75 is not limited to such an embodiment. A portion of each of the current collectors 70 and 75 may be joined to a portion of the insulating film 98 (the joining portion 98e in this embodiment) via an adhesive layer. For example, in the step of preparing the electrode assembly 40, an adhesive layer may be formed on a portion of each of the current collectors 70 and 75. The adhesive layer may be also formed on the joining portion 98e of the insulating film 98 when the joining portion 98e is provided at a location of the insulating film 98 in which the first side surface portion 98c1 and the second side surface portion 98c2 overlap. The adhesive layer may be, but is not particularly limited to, a rubber based adhesive agent. The step of restraining may include joining the portion of each of the current collectors 70 and 75 on which the adhesive layer has been formed and a portion of the insulating film 98 (the joining portion 98 in this embodiment).

The use of the adhesive layer makes it easier to form the joined part for the target object to be joined (the current collectors 70 and 75 in this embodiment) for over a wide region. As a result, it is easier to join the insulating film 98 and the current collectors 70 and 75 over a wide region without reducing productivity. Because the insulating film 98 and the current collectors 70 and 75 are joined together over a wide region, the electrode assembly 40 may be restrained more firmly. Note that the adhesive layer may also be formed on the flat portion 40f of the electrode assembly 40. This allows a wide surface of the electrode assembly 40 to be jointed to the insulating film 98. This enables the electrode assembly 40 to be restrained more firmly.

It is also possible to apply a surface treatment for improving bondability on the location where the insulating film 98 and the current collectors 70 and 75 are to be joined together. For example, it is possible that the step of preparing the electrode assembly 40 may also include applying a surface treatment on a portion of the current collectors 70 and 75 that is to be joined to the insulating film 98. The step of restraining may also include joining the insulating film 98 and the current collectors 70 and 75 together in a portion on which the surface treatment has been applied. As the surface treatment, it is possible to employ a treatment such as to increase the surface roughness of the current collectors 70 and 75. Examples of the surface treatment include laser marker, shot blasting, and etching. From the viewpoint of productivity and adverse effects on the location other than the joining part, it is preferable that the surface treatment be applied only to the joining part. From the viewpoint of the treatment capacity of the surface treatment and restricting the area for the surface treatment, it is preferable to apply a surface treatment on the current collectors 70 and 75 by a laser marker, which is easy to apply a surface treatment locally on the target object.

Hereinabove, joining the insulating film 98 and the current collectors 70 and 75 together and restraining the electrode assembly 40 have been described. However, as long as the electrode assembly 40 is restrained and damage to the tabs 42 and 44 is reduced, the members to which the insulating film 98 is to be joined is not limited to the current collectors 70 and 75. The insulating film 98 may be joined to, for example, the lid 54, the insulating member 94, and the like.

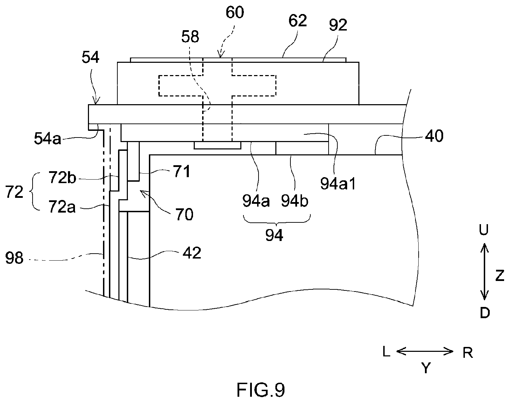

Fig. 9 is an enlarged view illustrating the lid 54 to which the electrode assembly 40 is connected. Fig. 9 shows side surfaces of the electrode assembly 40 and the lid 54 viewed in a thickness direction (in the X-axis direction) of the electrode assembly 40. In Fig. 9, the location where the insulating film 98 can be disposed is indicated by dash-dot-dot lines. As illustrated in Fig. 9, the lid 54 protrudes from the second current collector 72 in a widthwise direction Y The insulating film 98 may be attached to that protruding portion. For example, an upper portion of the insulating film 98 is folded with the insulating film 98 being fitted along the current collector 70 (the lower portion 72a of the second current collector 72 in this embodiment). That folded portion of the insulating film 98 may be joined to the bottom surface 54a of the lid 54. This allows the insulating film 98 to be positioned properly and makes the electrode assembly 40 unlikely to move along the widthwise direction Y Alternatively, the insulating film 98 may be joined to a side surface 94a1 of the base portion 94a of the insulating member 94. At this time, it is preferable that the insulating film 98 be in contact with the flat portion 40f of the electrode assembly 40. This makes it easier to restrict movements of the electrode assembly 40 along the thickness direction. As a result, the electrode assembly 40 can be restrained firmly, reducing damage to the tab 42.

Various embodiments of the technology according to the present disclosure have been described hereinabove. Unless specifically stated otherwise, the embodiments described herein do not limit the scope of the present disclosure. It should be noted that various other modifications and alterations may be possible in the embodiments of the technology disclosed herein. In addition, the features, structures, or steps described herein may be omitted as appropriate, or may be combined in any suitable combinations, unless specifically stated otherwise. In addition, the present description includes the disclosure as set forth in the following items.

### Item 1:

An electricity storage device including:
an electrode assembly including a tab;
a case main body including an opening and accommodating the electrode assembly;
a lid closing the opening;
a terminal attached to the lid;
an insulating member interposed between the lid and the terminal;
a current collector connected to the terminal and the tab of the electrode assembly; and
an insulating film disposed inside the case main body so as to cover the electrode assembly, the insulating film being made of a resin film and electrically insulating the case main body and the electrode assembly, wherein
the insulating film is joined to at least one of the lid, the insulating member attached to the lid, and the current collector.

### Item 2:

The electricity storage device according to item 1, wherein the insulating film is joined to the current collector.

### Item 3:

The electricity storage device according to item 2, wherein a portion of the current collector is welded to a portion of the insulating film.

### Item 4:

The electricity storage device according to item 2, wherein a portion of the current collector is joined to a portion of the insulating film via an adhesive layer.

### Item 5:

The electricity storage device according to any one of items 2 to 4, wherein a portion of the current collector that is joined to the insulating film is subjected to a surface treatment.

### Item 6:

A method of manufacturing an electricity storage device, comprising:
preparing a case main body including an opening;
preparing an electrode assembly to be accommodated in the case main body, the electrode assembly attached via a current collector to a lid;
preparing an insulating film made of a resin film;
restraining the electrode assembly with the insulating film; and
encasing the electrode assembly covered by the insulating film into the case main body, wherein:
   the electrode assembly prepared in the step of preparing the electrode assembly is connected to the current collector via a tab, and the lid is attached to a terminal via an insulating member; and
   the step of restraining includes joining the insulating film to at least one of the lid, the insulating member attached to the lid, and the current collector.

### Item 7:

The method of manufacturing an electricity storage device according to item 6, wherein the step of restraining includes joining a portion of the insulating film and a portion of the current collector to each other.

### Item 8:

The method of manufacturing an electricity storage device according to item 7, wherein the step of restraining includes heating a portion of the insulating film to weld the portion of the insulating film to at least a portion of the current collector.

### Item 9:

The method of manufacturing an electricity storage device according to item 7, wherein:
the step of preparing the electrode assembly includes forming an adhesive layer on a portion of the current collector; and
the step of restraining includes joining a portion of the insulating film and a portion of the current collector on which the adhesive layer is formed.

### Item 10:

The method of manufacturing an electricity storage device according to any one of items 7 to 9, wherein:
the step of preparing the electrode assembly includes applying a surface treatment on a portion of the current collector that is to be joined to the insulating film; and
the step of restraining includes joining the current collector and the insulating film together in a portion on which the surface treatment has been applied.

## Claims

1. An electricity storage device (100) comprising:
an electrode assembly (40) including a tab (43,44);
a case main body (52) including an opening (52h) and accommodating the electrode assembly (40);
a lid (54) closing the opening (52h);
a terminal (60,65) attached to the lid (54);
an insulating member (94) interposed between the lid (54) and the terminal (60,65);
a current collector (70,75) connected to the terminal (60,65) and the tab (43,44) of the electrode assembly (40); and
an insulating film (98) disposed inside the case main body (52) so as to cover the electrode assembly (40), the insulating film (98) being made of a resin film and electrically insulating the case main body (52) and the electrode assembly (40), wherein
the insulating film (98) is joined to at least one of the lid (54), the insulating member (94) attached to the lid (54), and the current collector (70,75).

2. The electricity storage device (100) according to claim 1, wherein the insulating film (98) is joined to the current collector (70,75).

3. The electricity storage device (100) according to claim 2, wherein a portion (72a) of the current collector (70,75) is welded to a portion (98e) of the insulating film (98).

4. The electricity storage device (100) according to claim 2, wherein a portion (72a) of the current collector (70,75) is joined to a portion (98e) of the insulating film (98) via an adhesive layer.

5. The electricity storage device (100) according to any one of claims 2 to 4, wherein a portion (72a) of the current collector (70,75) that is joined to the insulating film (98) is subjected to a surface treatment.

6. A method of manufacturing an electricity storage device (100), comprising:
preparing a case main body (52) including an opening (52h);
preparing an electrode assembly (40) to be accommodated in the case main body (52), the electrode assembly (40) attached via a current collector (70,75) to a lid (54);
preparing an insulating film (98) made of a resin film;
restraining the electrode assembly (40) with the insulating film (98); and
encasing the electrode assembly (40) covered by the insulating film (98) into the case main body (52), wherein:
the electrode assembly (40) prepared in the step of preparing the electrode assembly (40) is connected to the current collector (70,75) via a tab (43,44), and the lid (54) is attached to a terminal (60,65) via an insulating member (94); and
the step of restraining includes joining the insulating film (98) to at least one of the lid (54), the insulating member (94) attached to the lid (54), and the current collector (70,75).

7. The method of manufacturing an electricity storage device (100) according to claim 6, wherein the step of restraining includes joining a portion (98e) of the insulating film (98) and a portion (72a) of the current collector (70,75) to each other.

8. The method of manufacturing an electricity storage device (100) according to claim 7, wherein the step of restraining includes heating a portion (98e) of the insulating film (98) to weld the portion (98e) of the insulating film (98) to at least a portion (72a) of the current collector (70,75).

9. The method of manufacturing an electricity storage device (100) according to claim 7, wherein:
the step of preparing the electrode assembly (40) includes forming an adhesive layer on a portion (72a) of the current collector (70,75); and
the step of restraining includes joining a portion (98e) of the insulating film (98) and a portion (72a) of the current collector (70,75) on which the adhesive layer is formed.

10. The method of manufacturing an electricity storage device (100) according to any one of claims 7 to 9, wherein:
the step of preparing the electrode assembly (40) includes applying a surface treatment on a portion (72a) of the current collector (70,75) that is to be joined to the insulating film (98); and
the step of restraining includes joining the current collector (70,75) and the insulating film (98) together in a portion on which the surface treatment has been applied.
